(19) Europäisches Patentamt
European Patent Office
Office européen des brevets

(11) EP 2 778 726 A1

(12) EUROPEAN PATENT APPLICATION
published in accordance with Art. 153(4) EPC

(43) Date of publication:
**17.09.2014 Bulletin 2014/38**

(21) Application number: **12847721.3**

(22) Date of filing: **06.11.2012**

(51) Int Cl.:
*G02B 5/30* (2006.01) *C08F 212/06* (2006.01)
*C08J 5/18* (2006.01) *G02F 1/13363* (2006.01)

(86) International application number:
**PCT/JP2012/078740**

(87) International publication number:
**WO 2013/069642 (16.05.2013 Gazette 2013/20)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.11.2011 JP 2011246610**
**10.11.2011 JP 2011246612**

(71) Applicant: **JX Nippon Oil & Energy Corporation**
**Chiyoda-ku**
**Tokyo 100-8162 (JP)**

(72) Inventors:
- **MATSUO Akira**
  **Tokyo 100-8162 (JP)**
- **TAKAHASHI Yuji**
  **Tokyo 100-8162 (JP)**
- **TAKAGI Akira**
  **Tokyo 100-8162 (JP)**
- **SONE Hisashi**
  **Tokyo 100-8162 (JP)**

(74) Representative: **Grünecker, Kinkeldey, Stockmair & Schwanhäusser**
**Leopoldstrasse 4**
**80802 München (DE)**

# (54) PHASE DIFFERENCE FILM AND LIQUID CRYSTAL DISPLAY DEVICE PROVIDED WITH SAME

(57) A phase difference film obtained by stretching a resin film formed of a resin composition containing a copolymer having a first structural unit represented by the following formula (1) and a second structural unit represented by the following formula (2), in at least a uniaxial direction, in which the content of the first structural unit in the above-described copolymer is 3 to 50 mol% on the basis of the total of the first structural unit and the second structural unit.

[Chemical Formula 1]

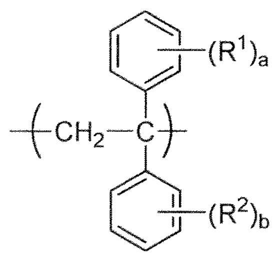

(1)

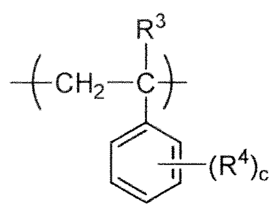

(2)

EP 2 778 726 A1

*Fig.1*

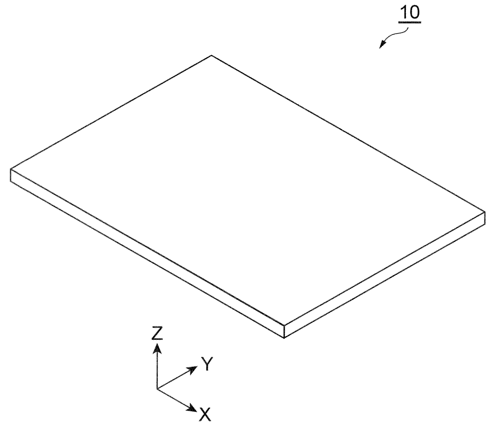

## Description

### Technical Field

The present invention relates to a phase difference film and a liquid crystal display device provided with the same.

### Background Art

For a liquid crystal display device such as a liquid crystal display (LCD), a phase difference film whose optical anisotropy is controlled is used for the purpose of optical compensation, and conventionally, a phase difference film mainly made of a material having positive birefringence, such as polycarbonate and cyclic polyolefin, has been used (for example, refer to Patent Literature 1).

In contrast, as a phase difference film made of a material having negative birefringence, a phase difference film made of polystyrene is disclosed in Patent Literature 2.

Moreover, a phase difference film having a reverse wavelength dispersion property, which contains a polystyrene resin having a syndiotactic structure and poly(2,6-dimethyl-1,4-phenylene oxide), is disclosed in Patent Literature 3.

### Citation List

### Patent Literature

Patent Literature 1: Japanese Patent Application Laid-Open No. 2003-255102
Patent Literature 2: U.S. Patent No. 5612801
Patent Literature 3: Japanese Patent Application Laid-Open No. 2010-78905

### Summary of Invention

### Technical Problem

A material having negative optical anisotropy means a material in which a refractive index in the chemical structural orientation direction of a polymer main chain becomes the minimum; the chemical structural orientation direction of a polymer main chain being a stretching direction in the case of uniaxially stretching a film made of this material, and being a stretching direction along which a degree of orientation becomes more increased in the case of biaxial stretching. On the other hand, a material having positive optical anisotropy means a material in which a refractive index in the chemical structural orientation direction of a polymer main chain becomes the maximum.

A phase difference film obtained by stretching a resin having negative birefringence is a "negative phase difference film" in which the phase difference Rth in the thickness direction is negative. The phase difference Rth is given by the expresion: $\{(Nx+Ny)/2-Nz\}\times d$, when a main stretching direction is referred to as an x-axial in a film plane, a refractive index in the x-axial direction is referred to as Nx, a refractive index in a y-axial direction perpendicular to the x-axial in the film plane is referred to as Ny, a refractive index in a direction perpendicular to both of the x-axial and the y-axial, is referred to as Nz, and the film thickness is referred to as d.

A phase difference film having a reverse wavelength dispersion property is a phase difference film in which birefringence $\Delta n=|Nx-Ny|$ is smaller at a shorter wavelength and larger at a longer wavelength and the wavelength dispersion value D is less than 1. The wavelength dispersion value D is a ratio of birefringence $\Delta n_450$ at the wavelength of 450 nm to birefringence $\Delta n_550$ at the wavelength of 550 nm, and is given by the equation $\Delta n_450/\Delta n_550$.

A negative phase difference film is expected to be used as a viewing angle compensation film in an IPS or FFS mode, a circular polarizing VA mode, and the like, but the phase difference film described in Patent Literature 2 has a problem of low heat resistance.

Although not described in Patent Literature 3, since the optical film described in Patent Literature 3 is a blend of polystyrene and poly(2,6-dimethyl-1,4-phenylene oxide), the glass-transition temperature of the film described in Examples is presumed to be about 115°C, and it cannot be said that the film has sufficient heat resistance as a phase difference film.

It is an object of the present invention to provide a negative phase difference film which excels in heat resistance and optical properties. Moreover, it is an object of the present invention to provide a liquid crystal display device provided with the phase difference film.

**Solution to Problem**

One aspect of the present invention relates to a phase difference film obtained by stretching a resin film formed of a resin composition containing a copolymer having a first structural unit represented by the following formula (1) and a second structural unit represented by the following formula (2), in at least a uniaxial direction, in which the content of the first structural unit in the copolymer is 3 to 50 mol% on the basis of the total of the first structural unit and the second structural unit:

[Chemical Formula 1]

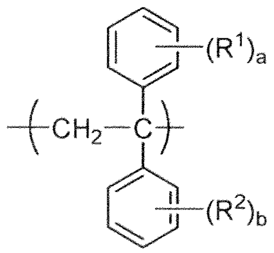

(1)

wherein a and b each represent independently an integer of 0 to 5; R and $R^2$ each represent independently a hydrogen atom or an organic residue having 1 to 12 carbon atoms; and when a or b is an integer of 2 or more, a plurality of $R^1$ or $R^2$ each may be the same or different from each other; and

[Chemical Formula 2]

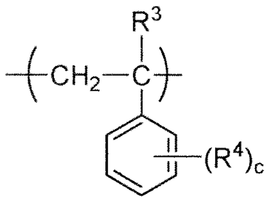

(2)

wherein c represents an integer of 0 to 5; $R^3$ represents a hydrogen atom or an organic residue having 1 to 4 carbon atoms; $R^4$ represents a hydrogen atom or an organic residue having 1 to 12 carbon atoms; and when c is an integer of 2 or more, a plurality of $R^4$ may be the same or different from each other.

The foregoing phase difference film can be suitably used as a negative phase difference film which excels in heat resistance and optical properties.

Moreover, another aspect of the present invention relates to a phase difference film obtained by stretching a resin film formed of a resin composition containing a copolymer having a first structural unit represented by the following formula (1) and a second structural unit represented by the following formula (2), and poly(2,6-dimethyl-1,4-phenylene oxide), in at least a uniaxial direction, in which the content of the poly(2,6-dimethyl-1,4-phenylene oxide) in the resin composition is 5 to 30 mass% on the basis of the total amount of the resin composition.:

[Chemical Formula 3]

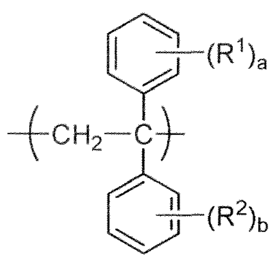

(1)

wherein a and b each represent independently an integer of 0 to 5; $R^1$ and $R^2$ each represent independently a hydrogen atom or an organic residue having 1 to 12 carbon atoms; and when a or b is an integer of 2 or more, a plurality of $R^1$ or

$R^2$ each may be the same or different from each other; and

[Chemical Formula 4]

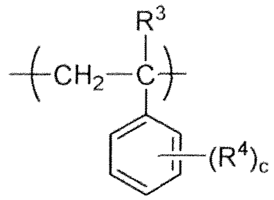

(2)

wherein c represents an integer of 0 to 5; $R^3$ represents a hydrogen atom or an organic residue having 1 to 4 carbon atoms; $R^4$ represents a hydrogen atom or an organic residue having 1 to 12 carbon atoms; and when c is an integer of 2 or more, a plurality of $R^4$ may be the same or different from each other.

The foregoing phase difference film can be suitably used as a negative phase difference film which excels in heat resistance and optical properties.

Furthermore, in the foregoing phase difference film, the content of the first structural unit in the copolymer may be 3 to 50 mol% on the basis of the total of the first structural unit and the second structural unit. Accordingly, optical properties of the phase difference film are further improved.

In one mode of the present invention, the glass-transition temperature of the copolymer may be 105 to 170°C. The foregoing phase difference film further excels in heat resistance.

In one mode of the present invention, the phase difference film may have the absolute value of the photoelastic coefficient of $5.0\times10^{-12}$ (/Pa) or less. According to the present invention, the absolute value of the photoelastic coefficient can be sufficiently decreased, and for example, the phase difference film having the absolute value of the photoelastic coefficient of $5.0\times10^{-12}$ (/Pa) or less, which has a small change in birefringence due to external force, excels in contrast and uniformity of a screen when being used for a large liquid crystal display device or the like.

In one mode of the present invention, the glass-transition temperature of the above-described resin composition may be 120°C or more. The foregoing phase difference film further excels in heat resistance.

In one mode of the present invention, a sufficiently-small wavelength dispersion property can be achieved in the phase difference film, and for example, the wavelength dispersion value D can be less than 1.06 and can also be $0.70<D<1.06$. When being used as a compensation film, the phase difference film having the wavelength dispersion value D of $0.70<D<1.06$ excels in viewing angle properties such as contrast and color hue, compared to the case where a phase difference film having $1.06<D$ is used. The wavelength dispersion value D can be controlled by, for example, the blending ratio between the copolymer and poly(2,6-dimethyl-1,4-phenylene oxide).

In one mode of the present invention, it is preferable that a refractive index Nx in an x-axial direction, a refractive index Ny in a y-axial direction and a refractive index Nz in a z-axial direction satisfy the relationship of $Nz \geq Ny > Nx$ when a main stretching direction of the phase difference film is referred to as an x-axial direction, a direction perpendicular to the x-axial direction in a plane of the phase difference film is referred to as a y-axial direction, and a direction perpendicular to both of the x-axial direction and the y-axial direction is referred to as a z-axial direction. The main stretching direction herein means a stretching direction in the case of uniaxial stretching, and a stretching direction along which a degree of orientation becomes more increased in the case of biaxial stretching. The foregoing phase difference film has an effect of reducing leak light in an oblique direction in black display of a liquid crystal panel (liquid crystal display device), which is generated due to phase difference values of a polarizing plate and a structural member arranged between the polarizing plate and a liquid crystal cell.

Moreover, another aspect of the present invention relates to a liquid crystal display device provided with the above-described phase difference film.

## Advantageous Effects of Invention

According to the present invention, a phase difference film having negative birefringence, which excels in heat resistance and optical properties, is provided. Moreover, according to the present invention, a liquid crystal display device provided with the phase difference film is provided.

## Brief Description of Drawings

[Figure 1] Figure 1 is a perspective view showing a first embodiment of a phase difference film of the present invention.
[Figure 2] Figure 2 is a perspective view showing a second embodiment of the phase difference film of the present invention.
[Figure 3] Figure 3 is a diagram showing the relationship between the glass-transition temperature and the content of a first structural unit, of a copolymer contained in the phase difference film.
[Figure 4] Figure 4 is a diagram showing the relationship between the photoelastic coefficient and the content of the first structural unit, of the copolymer contained in the phase difference film.

**Description of Embodiments**

Preferred embodiments of the present invention will be described hereinafter.

Figure 1 is a perspective view showing a first embodiment of a phase difference film of the present invention. A phase difference film 10 is a phase difference film obtained by stretching a resin film in a uniaxial direction, and the resin film is formed of a resin composition containing a copolymer having a first structural unit represented by the following formula (1) and a second structural unit represented by the following formula (2). Moreover, the content of the first structural unit in the copolymer is 3 to 50 mol% on the basis of the total of the first structural unit and the second structural unit.

[Chemical Formula 5]

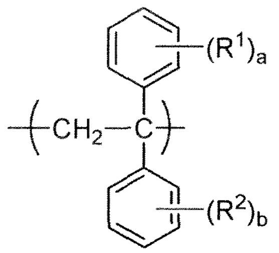

(1)

In the formula, a and b each represent independently an integer of 0 to 5, and $R^1$ and $R^2$ each represent independently a hydrogen atom or an organic residue having 1 to 12 carbon atoms. When a or b is an integer of 2 or more, a plurality of $R^1$ or $R^2$ each may be the same or different from each other.

[Chemical Formula 6]

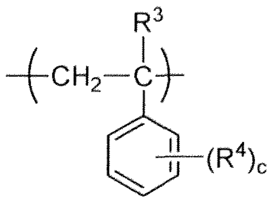

(2)

In the formula, c represents an integer of 0 to 5, $R^3$ represents a hydrogen atom, a hydrogen atom, or an organic residue having 1 to 4 carbon atoms, and $R^4$ represents a hydrogen atom or an organic residue having 1 to 12 carbon atoms. When c is an integer of 2 or more, a plurality of $R^4$ may be the same or different from each other.

The foregoing phase difference film 10 is a negative phase difference film which excels in heat resistance and optical properties. Hereinafter, the copolymer, the resin film, and the phase difference film 10 will be described in order.

(Copolymer)

As described above, the copolymer has the first structural unit represented by the formula (1) and the second structural unit represented by the formula (2), and the content of the first structural unit in the copolymer is 3 to 50 mol% on the basis of the total of the first structural unit and the second structural unit. The phase difference film 10 can achieve both excellent heat resistance and the smallness of the absolute value of the photoelastic coefficient by making the content of the first structural unit of the copolymer be 3 to 50 mol%.

In the formula (1), $R^1$ and $R^2$ are each an organic residue having 1 to 12 carbon atoms. The organic residue

is preferably a group composed of a carbon atom and a hydrogen atom, or a group composed of a carbon atom, a hydrogen atom, and an oxygen atom. Moreover, the organic residue is preferably an alkyl group, a hydroxyalkyl group, or an alkoxyalkyl group, and is more preferably an alkyl group.

The organic residue in $R^1$ and $R^2$ may be straight-chain or branched. Examples of the organic residue in $R^1$ and $R^2$ include a methyl group, an ethyl group, a n-propyl group, an iso-propyl group, a n-butyl group, a sec-butyl group, a tert-butyl group, a n-pentyl group, a 2-pentyl group, a n-hexyl group, a 2-hexyl group, a n-heptyl group, a 2-heptyl group, a 3-heptyl group, a n-octyl group, a 2-octyl group, and a 3-octyl group.

In the formula (1), a and b are each preferably an integer of 0 to 3, and from the viewpoint of heat resistance, 0 is more preferable.

In the formula (2), $R^3$ is a hydrogen atom or an organic residue having 1 to 4 carbon atoms. As the organic residue, a group composed of a carbon atom and a hydrogen atom, or a group composed of a carbon atom, a hydrogen atom, and an oxygen atom is preferable. As such an organic residue, an alkyl group, a hydroxyalkyl group, and an alkoxyalkyl group are preferable.

The organic residue in $R^3$ may be straight-chain or branched. Examples of the organic residue in $R^3$ include a methyl group, an ethyl group, a n-propyl group, an iso-propyl group, a n-butyl group, a sec-butyl group, a tert-butyl group, a hydroxymethyl group, a hydroxyethyl group, a methoxymethyl group, a methoxyethyl group, an ethoxymethyl group, and an ethoxyethyl group.

In the formula (2), $R^4$ is an organic residue having 1 to 12 carbon atoms. The organic residue is preferably a group composed of a carbon atom and a hydrogen atom, or a group composed of a carbon atom, a hydrogen atom, and an oxygen atom. Moreover, the organic residue is preferably an alkyl group, a hydroxyalkyl group, or an alkoxyalkyl group, and is more preferably an alkyl group.

The organic residue in $R^4$ may be straight-chain or branched. Examples of the organic residue in $R^4$ include a methyl group, an ethyl group, a n-propyl group, an iso-propyl group, a n-butyl group, a sec-butyl group, a tert-butyl group, a n-pentyl group, a 2-pentyl group, a n-hexyl group, a 2-hexyl group, a n-heptyl group, a 2-heptyl group, a 3-heptyl group, a n-octyl group, a 2-octyl group, and a 3-octyl group.

In the formula (2), c is preferably an integer of 0 to 3, and from the viewpoint of ease of polymerization, 0 is more preferable.

The content of the first structural unit in the copolymer is preferably 5 to 35 mol%, and more preferably 10 to 30 mol% on the basis of the total of the first structural unit and the second structural unit. Due to the content of the first structural unit within 5 mol% or more, the glass-transition temperature becomes 110°C or more and the photoelastic coefficient becomes $5.0\times10^{-12}$/Pa, resulting that both the further preferable heat resistance and photoelastic coefficient as a phase difference film can be obtained. In the case of 35 mol% or less, an effect of further improving fragility of a film is exhibited.

The content of the first structural unit can be calculated from a peak area of a peak derived from the first structural unit and a peak area of a peak derived from the second structural unit, after $^1$H-NMR of the copolymer is measured.

The weight-average molecular weight Mw of the copolymer is preferably 50,000 to 500,000, and more preferably 100,000 to 350,000. When Mw is 500,000 or less, sufficient fluidity is obtained in an extrusion stretching process, and melt extrusion and stretching film formation can be performed without any major difficulty. Moreover, when Mw is 50,000 or more, stretching stability and a sufficient degree of orientation for a film can be imparted.

Herein, the weight-average molecular weight Mw, the number average molecular weight Mn, and the molecular weight distribution Mw/Mn of the copolymer are values measured as the weight-average molecular weight Mw, the number average molecular weight Mn, and the molecular weight distribution Mw/Mn in terms of polystyrene, using gel permeation chromatography (GPC, manufactured by Tosoh Corporation, HLC-8020) in which three columns (TSKgel SuperHM-M) are connected and a RI detector is provided, and using tetrahydrofuran as a solvent.

The glass-transition temperature of the copolymer is preferably 105 to 170°C, and more preferably 110°C or more. The phase difference film containing the foregoing copolymer further excels in heat resistance.

The copolymer may further contain structural units other than the first structural unit and the second structural unit as long as a negative phase difference film is obtained. For example, the copolymer may contain structural units such as a methyl (meth)acrylate unit, an ethyl (meth)acrylate unit, a n-butyl (meth)acrylate unit, an iso-butyl (meth)acrylate unit, a t-butyl (meth)acrylate unit, a cyclohexyl (meth)acrylate unit, a 2-ethylhexyl (meth)acrylate unit, an acrylonitrile unit, a vinylnaphthalene unit, a vinylanthracene unit, a N-vinylpyrrolidone unit, an acrylonitrile unit, a N-vinylimidazole unit, a N-vinylacetamide unit, a N-vinylformaldehyde unit, a N-vinylcaprolactam unit, a N-vinylcarbazole unit, a N-phenylmaleimide unit, a 2-vinylpyridine unit, a 4-vinylpyridine unit, a butadiene unit and a saturated aliphatic structural unit obtained by hydrogenation of a butadiene unit, and an isoprene unit and a saturated aliphatic structural unit obtained by hydrogenation of an isoprene unit.

The total amount of the first structural unit and the second structural unit with respect to the total amount of the copolymer is preferably 80 to 100 mass%, and more preferably 90 to 100 mass%. According to the foregoing copolymer,

the effect of the present invention is further significantly exhibited.

The copolymer can be obtained by, for example, a copolymerization reaction of a first monomer represented by the following formula (3) and a second monomer represented by the following formula (4). In the formulas, a, b, c, $R^1$, $R^2$, $R^3$, and $R^4$ are synonymous with the above.

[Chemical Formula 7]

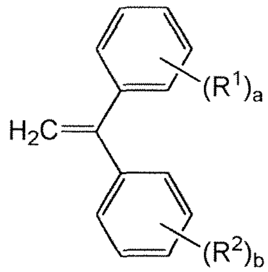

(3)

[Chemical Formula 8]

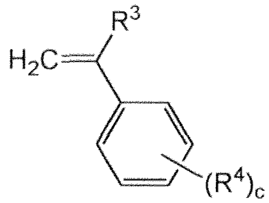

(4)

The copolymerization reaction can be performed, for example, by adding an anionic polymerization initiator to a reaction solution containing the first monomer and the second monomer.

As the anionic polymerization initiator, for example, organic alkali metal compounds are used. Examples of the organic alkali metal compounds include alkyllithium, aryllithium, alkylsodium, and arylsodium. As specific anionic polymerization initiators, for example, organic lithium compounds such as n-butyllithium, s-butyllithium, and t-butyllithium, and organic sodium compounds such as naphthalene sodium are used. Among them, preferred anionic polymerization initiators are organic lithium compounds such as n-butyllithium and s-butyllithium.

The number average molecular weight Mn and the weight-average molecular weight Mw of the copolymer can be adjusted by appropriately changing the amount of the anionic polymerization initiator added. The amount of the anionic polymerization initiator added is preferably 0.02 to 0.5 mol%, and more preferably 0.04 to 0.1 mol% on the basis of the total amount of the first monomer and the second monomer. It becomes easy to obtain the copolymer having the number average molecular weight Mn and the weight-average molecular weight Mw within preferred ranges by the foregoing amount added.

The reaction temperature of the copolymerization reaction is preferably 0 to 130°C, and more preferably 50 to 90°C. If the reaction temperature is decreased, the value of the molecular weight distribution Mw/Mn of the copolymer tends to become smaller, and if the reaction temperature is increased, the value of the molecular weight distribution Mw/Mn of the copolymer tends to become larger.

The reaction time of the copolymerization reaction is preferably 0.5 to 12 hours, and more preferably 1 to 6 hours.

The copolymerization reaction is preferably performed in a solvent, and a polymerization solvent is preferably a solvent that does not react with organic alkali metal compounds. As the solvents, cyclohexane, methylcyclohexane, benzene, toluene, xylene, ethylbenzene, t-butylbenzene or the like are preferably used.

(Resin Film)

The resin film is a film formed of a resin composition containing the above-described copolymer. A production method of the resin film is not particularly limited, and for example, known methods such as a casting method, a melt extrusion method, a calender method, and a compression molding method may be used.

As a molding apparatus used in the casting method, a drum-type casting machine, a band-type casting machine, a spin coater and the like can be used. In addition, examples of the melt extrusion method include a T-die method and

an inflation method.

In the casting method, the resin film can be produced using a film-forming solution containing the above-described copolymer. Examples of solvents of the film-forming solution include aromatic hydrocarbons such as benzene, toluene, xylene, ethylbenzene, and cumene; halogenated alkanes such as methylene chloride, dichloroethane, chlorobenzene, dichlorobenzene, chloroform, and tetrachloroethylene; cycloaliphatic solvents such as cyclohexane and decahydronaphthalene; cyclic ethers such as tetrahydrofuran and 1,4-dioxane; methyl ethyl ketone and cyclohexanone.

The resin composition forming the resin film may contain components other than the above-described copolymer. For example, the above-described solvent may be contained in the resin composition. From the viewpoint of heat resistance and expression of phase difference in a stretching operation, the content of the solvent is preferably 5000 ppm or less, and more preferably 1000 ppm or less.

Moreover, the resin composition forming the resin film may contain, within a range not departing from the spirit of the present invention, a polymer other than the above-described copolymer, a surfactant, a polymer electrolyte, a conductive complex, silica, alumina, a dye material, a thermal stabilizer, an ultraviolet absorbing agent, an antistatic agent, an antiblocking agent, a lubricant, a plasticizing agent, an oil and the like.

The content of the above-described copolymer in the resin composition forming the resin film is preferably 50 to 100 mass%, and more preferably 90 to 100 mass% on the basis of the total amount of the resin composition. When the content of the copolymer is within the above-described range, the effect of the present invention is further significantly exhibited.

(Phase Difference Film 10)

The phase difference film 10 is a film obtained by stretching a resin film. In general, a stretching method of a film is broadly classified into flat stretching for stretching in a film in-plane direction and tubular stretching for expanding into a tubular shape to stretch, but flat stretching having a high thickness and accuracy of a stretching ratio is particularly preferable. Moreover, flat stretching is classified into a uniaxial stretching method and a biaxial stretching method, and examples of the uniaxial stretching method include a free-width uniaxial stretching method and a constant-width uniaxial stretching method. On the other hand, examples of the biaxial stretching method include a two-step free-width biaxial stretching method, a successive biaxial stretching method, and a simultaneous biaxial stretching method, and examples of the successive biaxial stretching include an all-tenter system and a roll-tenter system. As the stretching method for producing a phase difference film from a transparent resin composition of the present invention, any of the above-described stretching methods may be used, and it is necessary to appropriately select the most suitable method based on a required three-dimensional refractive index and phase difference amount.

When the glass-transition temperature of the copolymer is referred to as Tg, the temperature when stretching is preferably Tg+5°C to Tg+40°C, and more preferably Tg+5°C to Tg+25°C. By performing stretching at the foregoing stretching temperature, mechanical properties and optical properties of the phase difference film are further improved.

Although not particularly limited, the thickness of the phase difference film 10 is preferably 10 to 500 μm, and more preferably 10 to 200 μm. By making the thickness of the phase difference film be 10 μm or more, mechanical properties and handling ability in secondary processing tend to be further improved, and by making it be 500 μm or less, flexibility tends to be further improved.

Since the phase difference film 10 is produced by using the above-described specific copolymer, the absolute value of the photoelastic coefficient is sufficiently small. The absolute value of the photoelastic coefficient of the phase difference film 10 is preferably $5.0\times10^{-12}$ (/Pa) or less, and more preferably $3.0\times10^{-12}$ (/Pa) or less. The foregoing phase difference film 10 has a sufficiently small change in birefringence due to external force, and can be further suitably used for applications of a liquid crystal display device and the like.

In the phase difference film 10, it is preferable that a refractive index Nx in an x-axial direction, a refractive index Ny in a y-axial direction, and a refractive index Nz in an z-axial direction satisfy the relationship of $Nz \geq Ny > Nx$, when a main stretching direction of the phase difference film 10 is referred to as an x-axial direction, a direction perpendicular to the x-axial direction in a plane of the phase difference film 10 is referred to as a y-axial direction, and a direction perpendicular to both of the x-axial direction and the y-axial direction (direction perpendicular to main surface of phase difference film 10) is referred to as a z-axial direction.

The main stretching direction herein means a stretching direction in the case of uniaxial stretching, and a stretching direction along which a degree of orientation becomes more increased in the case of biaxial stretching. The foregoing phase difference film has an effect of reducing leak light in an oblique direction in black display of a liquid crystal panel (liquid crystal display device), which is generated due to phase difference values of a polarizing plate and a structural member arranged between the polarizing plate and a liquid crystal cell.

In the present embodiment, the phase difference film 10 that satisfies the above-described relationship can be easily obtained by stretching the resin film formed of the resin composition containing the above-described copolymer.

For the purpose of imparting functions such as a gas barrier property, scratch resistance, chemical resistance,

and an antiglare property, a thin film may be formed on at least one surface of the phase difference film 10. Examples of a method for forming such a thin film include a method including coating a resin solution for forming a thin film on one surface of the phase difference film 10 by methods such as a gravure roll coating method, a Meyerbar coating method, a reverse roll coating method, a dip coating method, an air knife coating method, a calender coating method, a squeeze coating method, a kiss coating method, a fountain coating method, a spray coating method, and a spin coating method.

Examples of the resin solution for forming a thin film include a resin solution containing a thermoplastic resin; a thermosetting resin having an amino group, an imino group, an epoxy group, a silyl group and the like; a mixture of these resins; and the like. Moreover, a polymerization inhibitor, waxes, a dispersing agent, a dye material, a solvent, a plasticizing agent, an ultraviolet absorbing agent, an inorganic filler and the like may be added to the resin solution.

The above-described thin film may be a hardened thin film layer formed by hardening with irradiation or thermal hardening with heat after the above-described coating, if necessary. Moreover, in the case where printing is performed when forming such a thin film, methods such as a gravure system, an offset system, a flexo system, and a silkscreen system can be used.

Moreover, for the purpose of imparting a gas seal property and the like, a metal oxide layer containing aluminum, silicon, magnesium, zinc or the like as a main component may be formed on at least one surface of the phase difference film 10. Such a metal oxide layer can be formed by a vacuum deposition method, a sputtering method, an ion plating method, a plasma CVD method or the like.

The phase difference film 10 can be laminated on another film and then used. As the laminating method, conventionally-known methods can be appropriately used, and examples thereof include thermal bonding methods such as a heat sealing method, an impulse sealing method, an ultrasonic bonding method, and a high-frequency bonding method, and laminate processing methods such as an extrusion laminating method, a hot-melt laminating method, a dry laminating method, a wet laminating method, a solventless adhesive laminating method, a thermal laminating method, and a co-extrusion method.

Moreover, examples of a film to be laminated include a polyester resin film, a polyvinyl alcohol resin film, a cellulose resin film, a polyvinyl fluoride resin film, a polyvinylidene chloride resin film, a polyacrylonitrile resin film, a nylon resin film, a polyethylene resin film, a polypropylene resin film, an acetate resin film, a polyimide resin film, a polycarbonate resin film, and a polyacrylate resin film.

Next, a second embodiment of the present invention will be described. Figure 2 is a perspective view showing the second embodiment of the phase difference film of the present invention. A phase difference film 20 is a phase difference film obtained by stretching a resin film in at least a uniaxial direction, and the resin film is formed of a resin composition containing a copolymer having a first structural unit represented by the following formula (1) and a second structural unit represented by the following formula (2), and poly(2,6-dimethyl-1,4-phenylene oxide). Moreover, the content of poly(2,6-dimethyl-1,4-phenylene oxide) in the resin composition is 5 to 30 mass% on the basis of the total amount of the resin composition.

[Chemical Formula 9]

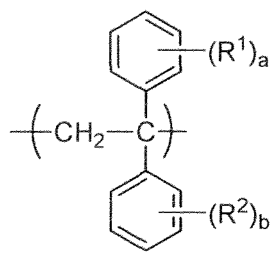

(1)

In the formula, a and b each represent independently an integer of 0 to 5, and $R^1$ and $R^2$ each represent independently a hydrogen atom or an organic residue having 1 to 12 carbon atoms. When a or b is an integer of 2 or more, a plurality of $R^1$ or $R^2$ each may be the same or different from each other.

[Chemical Formula 10]

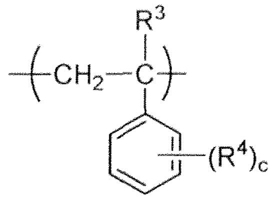

(2)

In the formula, c represents an integer of 0 to 5, $R^3$ represents a hydrogen atom, a hydrogen atom, or an organic residue having 1 to 4 carbon atoms, and $R^4$ represents a hydrogen atom or an organic residue having 1 to 12 carbon atoms. When c is an integer of 2 or more, a plurality of $R^4$ may be the same or different from each other.

The foregoing phase difference film 20 is a negative phase difference film which excels in heat resistance and optical properties. Hereinafter, the copolymer, the resin film, and the phase difference film 20 will be described in order.

(Copolymer)

As described above, the copolymer has the first structural unit represented by the formula (1) and the second structural unit represented by the formula (2).

In the formula (1), $R^1$ and $R^2$ are each an organic residue having 1 to 12 carbon atoms. The organic residue is preferably a group composed of a carbon atom and a hydrogen atom, or a group composed of a carbon atom, a hydrogen atom, and an oxygen atom. Moreover, the organic residue is preferably an alkyl group, a hydroxyalkyl group, or an alkoxyalkyl group, and is more preferably an alkyl group.

The organic residue in $R^1$ and $R^2$ may be straight-chain or branched. Examples of the organic residue in $R^1$ and $R^2$ include a methyl group, an ethyl group, a n-propyl group, an iso-propyl group, a n-butyl group, a sec-butyl group, a tert-butyl group, a n-pentyl group, a 2-pentyl group, a n-hexyl group, a 2-hexyl group, a n-heptyl group, a 2-heptyl group, a 3-heptyl group, a n-octyl group, a 2-octyl group, and a 3-octyl group.

In the formula (1), a and b are each preferably an integer of 0 to 3, and from the viewpoint of heat resistance, 0 is more preferable.

In the formula (2), $R^3$ is a hydrogen atom or an organic residue having 1 to 4 carbon atoms. As the organic residue, a group composed of a carbon atom and a hydrogen atom, or a group composed of a carbon atom, a hydrogen atom, and an oxygen atom is preferable. As such an organic residue, an alkyl group, a hydroxyalkyl group, and an alkoxyalkyl group are preferable.

The organic residue in $R^3$ may be straight-chain or branched. Examples of the organic residue in $R^3$ include a methyl group, an ethyl group, a n-propyl group, an iso-propyl group, a n-butyl group, a sec-butyl group, a tert-butyl group, a hydroxymethyl group, a hydroxyethyl group, a methoxymethyl group, a methoxyethyl group, an ethoxymethyl group, and an ethoxyethyl group.

In the formula (2), $R^4$ is an organic residue having 1 to 12 carbon atoms. The organic residue is preferably a group composed of a carbon atom and a hydrogen atom, or a group composed of a carbon atom, a hydrogen atom, and an oxygen atom. Moreover, the organic residue is preferably an alkyl group, a hydroxyalkyl group, or an alkoxyalkyl group, and is more preferably an alkyl group.

The organic residue in $R^4$ may be straight-chain or branched. Examples of the organic residue in $R^4$ include a methyl group, an ethyl group, a n-propyl group, an iso-propyl group, a n-butyl group, a sec-butyl group, a tert-butyl group, a n-pentyl group, a 2-pentyl group, a n-hexyl group, a 2-hexyl group, a n-heptyl group, a 2-heptyl group, a 3-heptyl group, a n-octyl group, a 2-octyl group, and a 3-octyl group.

In the formula (2), c is preferably an integer of 0 to 3, and from the viewpoint of ease of polymerization, 0 is more preferable.

The content of the first structural unit in the copolymer is preferably 3 to 50 mol%, more preferably 5 to 35 mol%, and further preferably 10 to 30 mol% on the basis of the total of the first structural unit and the second structural unit. In the case where the first structural unit is 3 mol% or more, it becomes easy for the glass-transition temperature to become a preferred value of 110°C or more, and heat resistance in the phase difference film tends to be further improved. In the case of 50 mol% or less, an effect of further improving fragility of a film is exhibited.

The content of the first structural unit can be calculated from a peak area of a peak derived from the first structural unit and a peak area of a peak derived from the second structural unit, after $^1$H-NMR of the copolymer is measured.

The weight-average molecular weight Mw of the copolymer is preferably 50,000 to 500,000, and more preferably

100,000 to 350,000. When Mw is 500,000 or less, sufficient fluidity is obtained in an extrusion stretching process, and melt extrusion and stretching film formation can be performed without any major difficulty. Moreover, when Mw is 50,000 or more, stretching stability and a sufficient degree of orientation for a film can be imparted.

Herein, the weight-average molecular weight Mw, the number average molecular weight Mn, and the molecular weight distribution Mw/Mn of the copolymer are values measured as the weight-average molecular weight Mw, the number average molecular weight Mn, and the molecular weight distribution Mw/Mn in terms of polystyrene, using gel permeation chromatography (GPC, manufactured by Tosoh Corporation, HLC-8020) in which three columns (TSKgel SuperHM-M) are connected and a RI detector is provided, and using tetrahydrofuran as a solvent.

The glass-transition temperature of the copolymer is preferably 105 to 170°C, and more preferably 110°C or more. By blending the foregoing copolymer with poly(2,6-dimethyl-1,4-phenylene oxide), heat resistance of the phase difference film tends to be further improved.

The copolymer may further contain structural units other than the first structural unit and the second structural unit as long as a negative phase difference film is obtained. For example, the copolymer may contain structural units such as a methyl (meth)acrylate unit, an ethyl (meth)acrylate unit, a n-butyl (meth)acrylate unit, an iso-butyl (meth)acrylate unit, a t-butyl (meth)acrylate unit, a cyclohexyl (meth)acrylate unit, a 2-ethylhexyl (meth)acrylate unit, an acrylonitrile unit, a vinylnaphthalene unit, a vinylanthracene unit, a N-vinylpyrrolidone unit, an acrylonitrile unit, a N-vinylimidazole unit, a N-vinylacetamide unit, a N-vinylformaldehyde unit, a N-vinylcaprolactam unit, a N-vinylcarbazole unit, a N-phenylmaleimide unit, a 2-vinylpyridine unit, a 4-vinylpyridine unit, a butadiene unit and a saturated aliphatic structural unit obtained by hydrogenation of a butadiene unit, and an isoprene unit and a saturated aliphatic structural unit obtained by hydrogenation of an isoprene unit.

The total amount of the first structural unit and the second structural unit with respect to the total amount of the copolymer is preferably 80 to 100 mass%, and more preferably 90 to 100 mass%. According to the foregoing copolymer, the effect of the present invention is further significantly exhibited.

The copolymer can be obtained by, for example, a copolymerization reaction of a first monomer represented by the following formula (3) and a second monomer represented by the following formula (4). In the formulas, a, b, c, $R^1$, $R^2$, $R^3$, and $R^4$ are synonymous with the above.

[Chemical Formula 11]

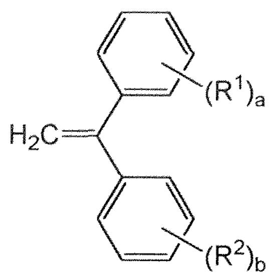

(3)

[Chemical Formula 12]

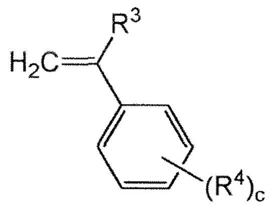

(4)

The copolymerization reaction can be performed, for example, by adding an anionic polymerization initiator to a reaction solution containing the first monomer and the second monomer.

As the anionic polymerization initiator, for example, organic alkali metal compounds are used. Examples of the organic alkali metal compounds include alkyllithium, aryllithium, alkylsodium, and arylsodium. As specific anionic polymerization initiators, for example, organic lithium compounds such as n-butyllithium, s-butyllithium, and t-butyllithium, and organic sodium compounds such as naphthalene sodium are used. Among them, preferred anionic polymerization initiators are organic lithium compounds such as n-butyllithium and s-butyllithium.

The number average molecular weight Mn and the weight-average molecular weight Mw of the copolymer can be adjusted by appropriately changing the amount of the anionic polymerization initiator added. The amount of the anionic polymerization initiator added is preferably 0.02 to 0.5 mol%, and more preferably 0.04 to 0.1 mol% on the basis of the total amount of the first monomer and the second monomer. It becomes easy to obtain the copolymer having the number average molecular weight Mn and the weight-average molecular weight Mw within preferred ranges by the foregoing amount added.

The reaction temperature of the copolymerization reaction is preferably 0 to 130°C, and more preferably 50 to 90°C. If the reaction temperature is decreased, the value of the molecular weight distribution Mw/Mn of the copolymer tends to become smaller, and if the reaction temperature is increased, the value of the molecular weight distribution Mw/Mn of the copolymer tends to become larger.

The reaction time of the copolymerization reaction is preferably 0.5 to 12 hours, and more preferably 1 to 6 hours.

The copolymerization reaction is preferably performed in a solvent, and a polymerization solvent is preferably a solvent that does not react with organic alkali metal compounds. As the solvents, cyclohexane, methylcyclohexane, benzene, toluene, xylene, ethylbenzene, t-butylbenzene or the like are preferably used.

(Resin Film)

The resin film is a film formed of a resin composition containing the above-described copolymer and poly(2,6-dimethyl-1,4-phenylene oxide). A production method of the resin film is not particularly limited, and for example, known methods such as a casting method, a melt extrusion method, a calender method, and a compression molding method may be used.

As a molding apparatus used in the casting method, a drum-type casting machine, a band-type casting machine, a spin coater and the like can be used. In addition, examples of the melt extrusion method include a T-die method and an inflation method.

In the casting method, the resin film can be produced using a film-forming solution containing the above-described copolymer. Examples of solvents of the film-forming solution include aromatic hydrocarbons such as benzene, toluene, xylene, ethylbenzene, and cumene; halogenated alkanes such as methylene chloride, dichloroethane, chlorobenzene, dichlorobenzene, chloroform, and tetrachloroethylene; cyclic ethers such as tetrahydrofuran and 1,4-dioxane; methyl ethyl ketone and cyclohexanone.

The resin composition forming the resin film contains the above-described copolymer and poly(2,6-dimethyl-1,4-phenylene oxide).

The content of poly(2,6-dimethyl-1,4-phenylene oxide) in the resin composition is 5 to 30 mass% on the basis of the total amount of the resin composition. In the present embodiment, the above-described copolymer and poly(2,6-dimethyl-1,4-phenylene oxide) are blended, and furthermore, the content of poly(2,6-dimethyl-1,4-phenylene oxide) is within the above-described range, so that both excellent heat resistance and excellent optical properties in the phase difference film 20 can be achieved.

From the viewpoint of heat resistance, the glass-transition temperature Tg of the resin composition is preferably 120°C or more, and more preferably 130°C or more. If Tg is 120°C or more, variation in a phase difference value, change in dimension and the like when being exposed to a high-temperature environment and the like are sufficiently suppressed.

The resin composition forming the resin film may contain components other than the above-described copolymer and poly(2,6-dimethyl-1,4-phenylene oxide). For example, the above-described solvent may be contained in the resin composition. From the viewpoint of heat resistance and expression of phase difference in a stretching operation, the content of the solvent is preferably 5000 ppm or less, and more preferably 1000 ppm or less.

Moreover, the resin composition forming the resin film may contain, within a range not departing from the spirit of the present invention, a polymer other than the above, a surfactant, a polymer electrolyte, a conductive complex, silica, alumina, a dye material, a thermal stabilizer, an ultraviolet absorbing agent, an antistatic agent, an antiblocking agent, a lubricant, a plasticizing agent, an oil and the like.

The total amount of the above-described copolymer and poly(2,6-dimethyl-1,4-phenylene oxide) in the resin composition forming the resin film is preferably 50 to 100 mass%, and more preferably 90 to 100 mass% on the basis of the total amount of the resin composition. When the above-described total amount is within the above-described range, the effect of the present invention is further significantly exhibited.

(Phase Difference Film 20)

The phase difference film 20 is a film obtained by stretching a resin film. In general, a stretching method of a film is broadly classified into flat stretching for stretching in a film in-plane direction and tubular stretching for expanding into a tubular shape to stretch, but flat stretching having a high thickness and accuracy of a stretching ratio is particularly preferable. Moreover, flat stretching is classified into a uniaxial stretching method and a biaxial stretching method, and

examples of the uniaxial stretching method include a free-width uniaxial stretching method and a constant-width uniaxial stretching method. On the other hand, examples of the biaxial stretching method include a two-step free-width biaxial stretching method, a successive biaxial stretching method, and a simultaneous biaxial stretching method, and examples of the successive biaxial stretching include an all-tenter system and a roll-tenter system. As the stretching method for producing a phase difference film from a transparent resin composition of the present invention, any of the above-described stretching methods may be used, and it is necessary to appropriately select the most suitable method based on a required three-dimensional refractive index and phase difference amount.

When the glass-transition temperature of the copolymer is referred to as Tg, the temperature when stretching is preferably Tg+5°C to Tg+40°C, and more preferably Tg+5°C to Tg+25°C. By performing stretching at the foregoing stretching temperature, mechanical properties and optical properties of the phase difference film are further improved.

Although not particularly limited, the thickness of the phase difference film 20 is preferably 10 to 500 μm, and more preferably 10 to 200 μm. By making the thickness of the phase difference film be 10 μm or more, mechanical properties and handling ability in secondary processing tend to be further improved, and by making it be 500 μm or less, flexibility tends to be further improved.

The wavelength dispersion value D of the phase difference film 20 is preferably less than 1.06. When being used as a compensation film, the foregoing phase difference film 20 excels in viewing angle properties such as contrast and color hue, compared to the case where a phase difference film having the wavelength dispersion value D of 1.06 or more is used. Moreover, the wavelength dispersion value D of the phase difference film 20 may be less than 1.00. A film having the wavelength dispersion value D of less than 1.00 is called a reverse wavelength dispersion film, and when being used as a compensation film, viewing angle properties such as contrast and color hue can be further improved.

In the phase difference film 20, it is preferable that a refractive index Nx in an x-axial direction, a refractive index Ny in an y-axial direction, and a refractive index Nz in an z-axial direction satisfy the relationship of $Nz \geq Ny > Nx$, when a main stretching direction of the phase difference film 20 is referred to as an x-axial direction, a direction perpendicular to the x-axial direction in a plane of the phase difference film 20 is referred to as a y-axial direction, and a direction perpendicular to both of the x-axial direction and the y-axial direction (direction perpendicular to main surface of phase difference film 20) is referred to as a z-axial direction.

The main stretching direction herein means a stretching direction in the case of uniaxial stretching, and a stretching direction along which a degree of orientation becomes more increased in the case of biaxial stretching. The foregoing phase difference film has an effect of reducing leak light in an oblique direction in black display of a liquid crystal panel (liquid crystal display device), which is generated due to phase difference values of a polarizing plate and a structural member arranged between the polarizing plate and a liquid crystal cell.

In the present embodiment, the phase difference film 20 that satisfies the above-described relationship can be easily obtained by stretching the resin film formed of the resin composition containing the above-described copolymer.

For the purpose of imparting functions such as a gas barrier property, scratch resistance, chemical resistance, and an antiglare property, a thin film may be formed on at least one surface of the phase difference film 20. Examples of a method for forming such a thin film include a method including coating a resin solution for forming a thin film on one surface of the phase difference film 20 by methods such as a gravure roll coating method, a Meyerbar coating method, a reverse roll coating method, a dip coating method, an air knife coating method, a calender coating method, a squeeze coating method, a kiss coating method, a fountain coating method, a spray coating method, and a spin coating method.

Examples of the resin solution for forming a thin film include a resin solution containing a thermoplastic resin; a thermosetting resin having an amino group, an imino group, an epoxy group, a silyl group and the like; a mixture of these resins; and the like. Moreover, a polymerization inhibitor, waxes, a dispersing agent, a dye material, a solvent, a plasticizing agent, an ultraviolet absorbing agent, an inorganic filler and the like may be added to the resin solution.

The above-described thin film may be a hardened thin film layer formed by hardening with irradiation or thermal hardening with heat after the above-described coating, if necessary. Moreover, in the case where printing is performed when forming such a thin film, methods such as a gravure system, an offset system, a flexo system, and a silkscreen system can be used.

Moreover, for the purpose of imparting a gas seal property and the like, a metal oxide layer containing aluminum, silicon, magnesium, zinc or the like as a main component may be formed on at least one surface of the phase difference film 20. Such a metal oxide layer can be formed by a vacuum deposition method, a sputtering method, an ion plating method, a plasma CVD method or the like.

The phase difference film 20 can be laminated on another film and then used. As the laminating method, conventionally-known methods can be appropriately used, and examples thereof include thermal bonding methods such as a heat sealing method, an impulse sealing method, an ultrasonic bonding method, and a high-frequency bonding method, and laminate processing methods such as an extrusion laminating method, a hot-melt laminating method, a dry laminating method, a wet laminating method, a solventless adhesive laminating method, a thermal laminating method, and a co-extrusion method.

Moreover, examples of a film to be laminated include a polyester resin film, a polyvinyl alcohol resin film, a

cellulose resin film, a polyvinyl fluoride resin film, a polyvinylidene chloride resin film, a polyacrylonitrile resin film, a nylon resin film, a polyethylene resin film, a polypropylene resin film, an acetate resin film, a polyimide resin film, a polycarbonate resin film, and a polyacrylate resin film.

Next, a preferred embodiment of a liquid crystal display device of the present invention will be described.

The liquid crystal display device according to the first embodiment is characterized by being provided with the phase difference film 10. The phase difference film 10 can be suitably used as a phase difference film in a liquid crystal display device. More specifically, the phase difference film 10 can be suitably used for applications of a 1/4λ plate in a reflective liquid crystal display device, a 1/4λ plate in a transmissive liquid crystal display device, a 1/2λ plate or a 1/4λ plate in a liquid crystal projector device, a protection film or an antireflection film of a polarizing film in a liquid crystal display device, and the like.

That is, the liquid crystal display device is preferably provided with the phase difference film 10 as a 1/4λ plate, a 1/2λ plate, a protection film, or an antireflection film. The configuration of the liquid crystal display device other than the phase difference film 10 is not particularly limited, and may be the same as a conventionally-known liquid crystal display film.

Moreover, the phase difference film 10 can also be used as a transparent electrode film in a liquid crystal display device, such as a touch panel, after forming a ceramic thin film made of indium tin oxide, indium zinc oxide, or the like on at least one surface thereof by a plasma process using DC or glow discharge.

Furthermore, the liquid crystal display device according to the second embodiment is characterized by being provided with the phase difference film 20. The phase difference film 20 can be suitably used as a phase difference film in a liquid crystal display device. More specifically, the phase difference film 20 can be suitably used for applications of a viewing angle compensation film in an IPS or FFS mode, a circular polarizing VA mode, and the like.

That is, the liquid crystal display device is preferably provided with the phase difference film 20 as a viewing angle compensation film. The configuration of the liquid crystal display device other than the phase difference film 20 is not particularly limited, and may be the same as a conventionally-known liquid crystal display film.

Moreover, the phase difference film 20 can also be used as a transparent electrode film in a liquid crystal display device, such as a touch panel, after forming a ceramic thin film made of indium tin oxide, indium zinc oxide, or the like on at least one surface thereof by a plasma process using DC or glow discharge.

The preferred embodiments of the present invention have been described above, but the present invention is not limited to the above-described embodiments.

## Examples

Hereinafter, the present invention will be described more specifically with reference to examples, but the present invention is not limited to examples.

Firstly, an example according to the phase difference film according to the first embodiment will be described.

(Synthesis Example 1-1: Synthesis of Copolymer 1-1)

In a 100 mL volume glass reactor, 6.33 g (60.9 mmol) of styrene and 1.26 g (7.00 mmol) of 1,1-diphenylethylene were weighed and put under a nitrogen atmosphere, and diluted with 20 mL of cyclohexane. After the solution was cooled with an ice bath, a 0.10 M s-butyllithium/cyclohexane solution was dropped little by little until the system became pale yellow, and remaining moisture was removed.

Then, 0.25 mL of the 0.10 M s-butyllithium/cyclohexane solution (0.025 mmol as s-butyllithium) was added. The solution was heated with an oil bath at 50°C while being stirred, and changed into dark red, and increase in viscosity due to progression of a polymerization reaction was observed. After continuing the heating and stirring for 4 hours, 5 mL of methanol was added to stop the reaction. The reaction solution was poured into 2 L of methanol, and a white precipitate was collected by filtration. The obtained precipitate was washed with boiling methanol, and then, dried at 120°C under reduced pressure for 12 hours to obtain styrene/1,1-diphenylethylene copolymer (hereinafter, referred to as "copolymer 1-1").

With respect to the obtained copolymer 1-1, the contents of the first structural unit and the second structural unit, the molecular weight, the molecular weight distribution, and the glass-transition temperature (Tg) were measured by the following methods. The measurement results were as shown in Table 1.

(Measurement of Content)

$^1$H-NMR of the obtained copolymer was measured using a superconducting nuclear magnetic resonance absorption apparatus (NMR, Varian Inc., INOVA600), and the contents of the first structural unit and the second structural unit were calculated from the peak area ratio of aromatic protons, methyl, methylene, and methine.

(Measurement of Molecular Weight and Molecular Weight Distribution)

The measurement was performed using gel permeation chromatography (GPC, manufactured by Tosoh Corporation, HLC-8020) in which three columns (TSKgel SuperHM-M) are connected and a RI detector is provided. Tetrahydrofuran was used as a solvent, and the number average molecular weight (Mn), the weight-average molecular weight (Mw), and the molecular weight distribution (Mw/Mn) of the obtained copolymer, in terms of polystyrene, were determined.

(Measurement of Glass-Transition Temperature (Tg))

The measurement was performed using a differential scanning calorimeter (DSC, manufactured by SII Nano Technology Inc., DSC 7020). Specifically, under a nitrogen atmosphere, the temperature was increased to 230°C from the room temperature (25°C) at 20°C/min, and then, returned to the room temperature at 20°C/min, and increased again to 230°C at 10°C/min. The glass-transition temperature measured in the second heat-increasing process was defined as Tg. In the measurement, powder obtained by reprecipitation purification of the obtained copolymer was used.

(Synthesis Example 1-2: Synthesis of Copolymer 1-2)

Styrene/1,1-diphenylethylene copolymer (hereinafter, referred to as "copolymer 1-2") was obtained in the same manner as Synthesis Example 1-1 except that the amount of styrene used was 5.33 g (51.3 mmol) and the amount of 1,1-diphenylethylene used was 2.29 g (12.7 mmol).
With respect to the obtained copolymer 1-2, the contents of the first structural unit and the second structural unit, the molecular weight, the molecular weight distribution, and the glass-transition temperature (Tg) were measured by the above-described methods. The measurement results were as shown in Table 1.

(Synthesis Example 1-3: Synthesis of Copolymer 1-3)

Styrene/1,1-diphenylethylene copolymer (hereinafter, referred to as "copolymer 1-3") was obtained in the same manner as Synthesis Example 1-1 except that the amount of styrene used was 4.61 g (44.3 mmol) and the amount of 1,1-diphenylethylene used was 3.45 g (19.2 mmol).
With respect to the obtained copolymer 1-3, the contents of the first structural unit and the second structural unit, the molecular weight, the molecular weight distribution, and the glass-transition temperature (Tg) were measured by the above-described methods. The measurement results were as shown in Table 1.

[Table 1]

| | Content (mol%) | | Molecular Weight | | Tg (°C) |
|---|---|---|---|---|---|
| | First Structural Unit | Second Structural Unit | Mw ($\times 10^4$) | Mw/Mn | |
| Copolymer 1-1 | 10 | 90 | 32.0 | 1.14 | 122 |
| Copolymer 1-2 | 21 | 79 | 25.4 | 1.19 | 136 |
| Copolymer 1-3 | 33 | 67 | 22.8 | 1.29 | 155 |

(Example 1-1)

A chlorobenzene solution containing 10 mass% of the copolymer 1-1 obtained in Synthesis Example 1-1 was prepared, and it was supplied on a glass plate into a film shape by a casting method and naturally dried for 72 hours. The obtained film was peeled off from the glass plate, and then, dried under reduced pressure at 120°C until the concentration of chlorobenzene became 500 massppm or less to obtain an unstretched film 1-1. The transparency of the obtained unstretched film 1-1 was high and the film thickness was 36 μm.
Next, the obtained unstretched film 1-1 was cut out into 7x7 cm, and uniaxial stretching at 2.0-fold magnification was performed using a biaxial stretching apparatus (Imoto Machinery Co., Ltd. IMC-190A) under a temperature condition of Tg of the copolymer 1-1 + 12°C (134°C) at a tension rate of 120 mm/min. to obtain a phase difference film 1-1 having a thickness of 25 μm.

(Example 1-2)

An unstretched film 1-2 was obtained by the same method as Example 1-1 except that the copolymer 1-2 was used in place of the copolymer 1-1. The transparency of the obtained unstretched film 1-2 was high and the film thickness was 42 μm.

Next, the obtained unstretched film 1-2 was cut out into 7x7 cm, and uniaxial stretching at 2.0-fold magnification was performed using a biaxial stretching apparatus (Imoto Machinery Co., Ltd. IMC-190A) under a temperature condition of Tg of the copolymer 1-2 + 12°C (148°C) at a tension rate of 120 mm/min. to obtain a phase difference film 1-2 having a thickness of 30 μm.

(Example 1-3)

An unstretched film 1-3 was obtained by the same method as Example 1-1 except that the copolymer 1-3 was used in place of the copolymer 1-1. The transparency of the obtained unstretched film 1-3 was high and the film thickness was 53 μm.

Next, the obtained unstretched film 1-3 was cut out into 7x7 cm, and uniaxial stretching at 2.0-fold magnification was performed using a biaxial stretching apparatus (Imoto Machinery Co., Ltd. IMC-190A) under a temperature condition of Tg of the copolymer 1-3 + 12°C (167°C) at a tension rate of 120 mm/min. to obtain a phase difference film 1-3 having a thickness of 37 μm.

(Example 1-4)

An unstretched film 1-4 having high transparency and a film thickness of 42 μm was obtained by the same method as Example 1-2.

Next, the obtained unstretched film 1-4 was cut out into 7×7 cm, and simultaneous biaxial stretching at 1.4-fold magnification was performed using a biaxial stretching apparatus (Imoto Machinery Co., Ltd. IMC-190A) under a temperature condition of Tg of the copolymer 1-2 + 12°C (148°C) at a tension rate of 120 mm/min. to obtain a phase difference film 1-4 having a thickness of 29 μm.

(Example 1-5)

An unstretched film 1-5 having high transparency and a film thickness of 51 μm was obtained by the same method as Example 1-2.

Next, the obtained unstretched film 1-5 was cut out into 7×7 cm, and simultaneous biaxial stretching at 1.7-fold magnification was performed using a biaxial stretching apparatus (Imoto Machinery Co., Ltd. IMC-190A) under a temperature condition of Tg of the copolymer 1-2 + 12°C (148°C) at a tension rate of 120 mm/min. to obtain a phase difference film 1-5 having a thickness of 24 μm.

(Comparative Example 1-1)

An unstretched film 1-6 was obtained by the same method as Example 1-1 except that commercial polystyrene (Wako Pure Chemical Industries, Ltd., glass-transition temperature: 100°C, weight-average molecular weight Mw: $165\times10^3$, molecular weight distribution Mw/Mn: 2.0) was used in place of the copolymer 1-1. The transparency of the obtained unstretched film 1-6 was high and the film thickness was 35 μm.

Next, the obtained unstretched film 1-6 was cut out into 7x7 cm, and uniaxial stretching at 2.0-fold magnification was performed using a biaxial stretching apparatus (Imoto Machinery Co., Ltd. IMC-190A) under a temperature condition of Tg of polystyrene + 12°C (112°C) at a tension rate of 120 mm/min. to obtain a phase difference film 1-6 having a thickness of 25 μm.

With respect to the phase difference films obtained in Examples 1-1 to 1-5 and Comparative Example 1-1, the retardation, the refractive index, and the photoelastic coefficient were measured by the following methods. The measurement results were as shown in Table 2.

(Measurement of Refractive Index and Retardation)

The retardation (Re, Rth) defined by the following equations was determined using a retardation measuring instrument (manufactured by Oji Scientific Instruments KOBRA-21ADH):

$$Re=|Nx-Ny|\times d$$

$$Rth=|Nz-(Nx+Ny)/2|\times d$$

wherein Nx: refractive index in main stretching direction, Ny: in-plane refractive index in direction perpendicular to main stretching direction, Nz: refractive index in direction perpendicular to plane (perpendicular to Nx and Ny), d: film thickness (μm).

(Measurement of Photoelastic Coefficient)

The measurement was performed by applying compressive load to a 9 mm×80 mm test piece cut out from each of the films obtained in Examples and Comparative Example, at 22°C and a rate of 0.1 mm/min, using a photoelastic coefficient measuring instrument (manufactured by Uniopt Corporation, Ltd. PHEL-20A).

[Table 2]

| | Film Thickness (μm) | Retardation (nm) | | Nx | Ny | Nz | Photoelastic Coefficient ($\times 10^{-12}$/Pa) |
|---|---|---|---|---|---|---|---|
| | | Re | Rth | | | | |
| Example 1-1 | 25 | 275 | 138 | 1.589 | 1.600 | 1.600 | 1.84 |
| Example 1-2 | 30 | 270 | 135 | 1.595 | 1.604 | 1.604 | -0.09 |
| Example 1-3 | 37 | 187 | 93 | 1.606 | 1.611 | 1.611 | -3.07 |
| Example 1-4 | 29 | 32.8 | 246 | 1.597 | 1.598 | 1.606 | 1.84 |
| Example 1-5 | 24 | 28.0 | 228 | 1.596 | 1.597 | 1.606 | 1.84 |
| Comparative Example 1-1 | 25 | 300 | 150 | 1.582 | 1.594 | 1.594 | 10.14 |

As shown in Table 2, it was confirmed that the stretched films obtained in Examples successfully function as a phase difference film. Moreover, it was confirmed that the phase difference films of Examples satisfy the following expression (1) and function as a so-called negative phase difference film.

$$Nz \geq Ny > Nx \quad (1)$$

Furthermore, it was confirmed that the phase difference films obtained in Examples achieve both excellent heat resistance and optical properties from the facts that the absolute value of the photoelastic coefficient is small and that the glass-transition temperature of the copolymer is high. In contrast, the film of Comparative Example 1-1 was not suitable for a phase difference film because the absolute value of the photoelastic coefficient is large.

Figure 3 is a diagram showing the relationship between the glass-transition temperature Tg and the content of the first structural unit, of the polymers (copolymers 1-1 to 1-3 and polystyrene) contained in the phase difference films of Examples 1-1 to 1-3 and Comparative Example 1-1.

Figure 4 is a diagram showing the relationship between the content of the first structural unit and the photoelastic coefficient, of the polymers (copolymers 1-1 to 1-3 and polystyrene) contained in the phase difference films of Examples 1-1 to 1-3 and Comparative Example 1-1.

As shown in Figure 3 and Figure 4, by making the content of the first structural unit be in a predetermined range, the absolute value of the photoelastic coefficient can be made sufficiently small while obtaining the high glass-transition temperature.

Next, an example according to the phase difference film according to the second embodiment will be described.

(Synthesis Example 2-1: Synthesis of Copolymer 1)

In a 100 mL volume glass reactor, 5.33 g (51.3 mmol) of styrene and 2.29 g (12.7 mmol) of 1,1-diphenylethylene

were weighed and put under a nitrogen atmosphere, and diluted with 20 mL of cyclohexane. After the solution was cooled with an ice bath, a 0.10 M s-butyllithium/cyclohexane solution was dropped little by little until the system became pale yellow, and remaining moisture was removed.

Then, 0.25 mL of the 0.10 M s-butyllithium/cyclohexane solution (0.025 mmol as s-butyllithium) was added. The solution was heated with an oil bath at 50°C while being stirred, and changed into dark red, and increase in viscosity due to progression of a polymerization reaction was observed. After continuing the heating and stirring for 4 hours, 5 mL of methanol was added to stop the reaction. The reaction solution was poured into 2 L of methanol, and a white precipitate was collected by filtration. The obtained precipitate was washed with boiling methanol, and then, dried at 120°C under reduced pressure for 12 hours to obtain styrene/1,1-diphenylethylene copolymer (hereinafter, referred to as "copolymer 2-1 ").

With respect to the obtained copolymer 2-1, the contents of the first structural unit and the second structural unit, the molecular weight, the molecular weight distribution, and the glass-transition temperature (Tg) were measured by the following methods. The measurement results were as shown in Table 3.

(Measurement of Content)

$^1$H-NMR of the obtained copolymer was measured using a superconducting nuclear magnetic resonance absorption apparatus (NMR, Varian Inc., INOVA600), and the contents of the first structural unit and the second structural unit were calculated from the peak area ratio of aromatic protons, methyl, methylene, and methine.

(Measurement of Molecular Weight and Molecular Weight Distribution)

The measurement was performed using gel permeation chromatography (GPC, manufactured by Tosoh Corporation, HLC-8020) in which three columns (TSKgel SuperHM-M) are connected and a RI detector is provided. Tetrahydrofuran was used as a solvent, and the number average molecular weight (Mn), the weight-average molecular weight (Mw), and the molecular weight distribution (Mw/Mn) of the obtained copolymer, in terms of polystyrene, were determined.

(Measurement of Glass-Transition Temperature (Tg))

The measurement was performed using a differential scanning calorimeter (DSC, manufactured by SII Nano Technology Inc., DSC 7020). Specifically, under a nitrogen atmosphere, the temperature was increased to 230°C from the room temperature (25°C) at 20°C/min, and then, returned to the room temperature at 20°C/min, and increased again to 230°C at 10°C/min. The glass-transition temperature measured in the second heat-increasing process was defined as Tg. In the measurement, powder obtained by reprecipitation purification of the obtained copolymer was used.

[Table 3]

| | Content (mol%) | | Molecular Weight | | Tg (°C) |
|---|---|---|---|---|---|
| | First Structural Unit | Second Structural Unit | Mw ($\times 10^4$) | Mw/Mn | |
| Copolymer 2-1 | 21 | 79 | 25.4 | 1.19 | 136 |

(Example 2-1)

A chloroform solution containing 10 mass% of a resin mixture 2-1, in which the copolymer 2-1 obtained in Synthesis Example 2-1 and poly(2,6-dimethyl-1,4-phenylene oxide) [manufactured by Sigma-Aldrich Co. LLC., catalog No. 25134-01-4, weight-average molecular weight=244000, glass-transition temperature=211°C] were blended at a mass ratio of 90:10, was prepared, and it was supplied on a glass plate into a film shape by a casting method and naturally dried for 72 hours. The obtained film was peeled off from the glass plate, and then, dried under reduced pressure at 140°C until the concentration of chloroform became 500 massppm or less to obtain an unstretched film 2-1. The transparency of the obtained unstretched film 2-1 was high, the film thickness was 83 μm, and Tg of a resin composition 2-1 forming the unstretched film 1 was 136°C.

Next, the obtained unstretched film 2-1 was cut out into 7×7 cm, and uniaxial stretching at 2.0-fold magnification was performed using a biaxial stretching apparatus (Imoto Machinery Co., Ltd. IMC-190A) under a temperature condition of Tg of the resin composition 2-1 + 12°C (148°C) at a tension rate of 120 mm/min. to obtain a phase difference film 2-1 having a thickness of 59 μm.

(Example 2-2)

An unstretched film 2-2 was obtained by the same method as Example 2-1 except that the resin mixture 2-1 was changed to a resin mixture 2-2 in which the copolymer 2-1 and poly(2,6-dimethyl-1,4-phenylene oxide) were blended at a mass ratio of 80:20. The transparency of the obtained unstretched film 2-2 was high, the film thickness was 74 μm, and Tg of a resin composition 2-2 forming the unstretched film 2-2 was 143°C.

Next, the obtained unstretched film 2-2 was cut out into 7x7 cm, and uniaxial stretching at 2.0-fold magnification was performed using a biaxial stretching apparatus (Imoto Machinery Co., Ltd. IMC-190A) under a temperature condition of Tg of the resin composition 2-2 + 12°C (155°C) at a tension rate of 120 mm/min. to obtain a phase difference film 2-2 having a thickness of 52 μm.

(Example 2-3)

An unstretched film 2-3 was obtained by the same method as Example 2-1 except that the resin mixture 2-1 was changed to a resin mixture 2-3 in which the copolymer 2-1 and poly(2,6-dimethyl-1,4-phenylene oxide) were blended at a mass ratio of 78:22. The transparency of the obtained unstretched film 2-3 was high, the film thickness was 79 μm, and Tg of a resin composition 2-3 forming the unstretched film 2-3 was 145°C.

Next, the obtained unstretched film 2-3 was cut out into 7×7 cm, and uniaxial stretching at 2.0-fold magnification was performed using a biaxial stretching apparatus (Imoto Machinery Co., Ltd. IMC-190A) under a temperature condition of Tg of the resin composition 2-3 + 12°C (157°C) at a tension rate of 120 mm/min. to obtain a phase difference film 2-3 having a thickness of 56 μm.

(Example 2-4)

An unstretched film 2-4 was obtained by the same method as Example 2-1 except that the resin mixture 2-1 was changed to a resin mixture 2-4 in which the copolymer 2-1 and poly(2,6-dimethyl-1,4-phenylene oxide) were blended at a mass ratio of 75:25. The transparency of the obtained unstretched film 2-4 was high, the film thickness was 85 μm, and Tg of a resin composition 2-4 forming the unstretched film 2-4 was 147°C.

Next, the obtained unstretched film 2-4 was cut out into 7x7 cm, and uniaxial stretching at 2.0-fold magnification was performed using a biaxial stretching apparatus (Imoto Machinery Co., Ltd. IMC-190A) under a temperature condition of Tg of the resin composition 2-4 + 12°C (159°C) at a tension rate of 120 mm/min. to obtain a phase difference film 2-4 having a thickness of 60 μm.

(Example 2-5)

An unstretched film 2-5 was obtained by the same method as Example 2-1 except that the resin mixture 2-1 was changed to a resin mixture 2-5 in which the copolymer 2-1 and poly(2,6-dimethyl-1,4-phenylene oxide) were blended at a mass ratio of 72:28. The transparency of the obtained unstretched film 2-5 was high, the film thickness was 83 μm, and Tg of a resin composition 2-5 forming the unstretched film 2-5 was 149°C.

Next, the obtained unstretched film 2-5 was cut out into 7x7 cm, and uniaxial stretching at 2.0-fold magnification was performed using a biaxial stretching apparatus (Imoto Machinery Co., Ltd. IMC-190A) under a temperature condition of Tg of the resin composition 2-5 + 12°C (161°C) at a tension rate of 120 mm/min. to obtain a phase difference film 2-5 having a thickness of 59 μm.

(Example 2-6)

An unstretched film 2-6 having high transparency and a film thickness of 77 μm was obtained by the same method as Example 2-4.

Next, the obtained unstretched film 2-6 was cut out into 7x7 cm, and simultaneous biaxial stretching at 1.4-fold magnification was performed using a biaxial stretching apparatus (Imoto Machinery Co., Ltd. IMC-190A) under a temperature condition of Tg of the resin composition 2-4 + 12°C (159°C) at a tension rate of 120 mm/min. to obtain a phase difference film 2-6 having a thickness of 55 μm.

(Example 2-7)

An unstretched film 2-7 having high transparency and a thickness of 76 μm was obtained by the same method as Example 2-4.

Next, the obtained unstretched film 2-7 was cut out into 7x7 cm, and simultaneous biaxial stretching at 1.8-fold

magnification was performed using a biaxial stretching apparatus (Imoto Machinery Co., Ltd. IMC-190A) under a temperature condition of Tg of the resin composition 2-4 + 12°C (159°C) at a tension rate of 120 mm/min. to obtain a phase difference film 2-7 having a thickness of 33 μm.

(Comparative Example 2-1)

An unstretched film 2-8 was obtained by the same method as Example 2-1 except that the resin mixture 2-1 was changed to the copolymer 2-1 (the mass ratio of the copolymer 2-1 to poly(2,6-dimethyl-1,4-phenylene oxide) was 100:0). The transparency of the obtained unstretched film 2-8 was high, the film thickness was 42 μm, and Tg of a resin composition 2-8 forming the unstretched film 2-8 was 133°C.
Next, the obtained unstretched film 2-8 was cut out into 7×7 cm, and uniaxial stretching at 2.0-fold magnification was performed using a biaxial stretching apparatus (Imoto Machinery Co., Ltd. IMC-190A) under a temperature condition of Tg of the resin composition 2-8 + 12°C (145°C) at a tension rate of 120 mm/min. to obtain a phase difference film 2-8 having a thickness of 30 μm.

(Comparative Example 2-2)

An unstretched film 2-9 was obtained by the same method as Example 2-1 except that the resin mixture 2-1 was changed to a resin mixture 2-9 in which the copolymer 2-1 and poly(2,6-dimethyl-1,4-phenylene oxide) were blended at a mass ratio of 60:40. The transparency of the obtained unstretched film 2-9 was high, the film thickness was 82 μm, and Tg of a resin composition 2-9 forming the unstretched film 2-9 was 158°C.
Next, the obtained unstretched film 2-9 was cut out into 7x7 cm, and uniaxial stretching at 2.0-fold magnification was performed using a biaxial stretching apparatus (Imoto Machinery Co., Ltd. IMC-190A) under a temperature condition of Tg of the resin composition 2-9 + 12°C (170°C) at a tension rate of 120 mm/min. to obtain a phase difference film 2-9 having a thickness of 58 μm.

(Comparative Example 2-3)

An unstretched film 2-10 was obtained by the same method as Example 2-4 except that commercial polystyrene (Wako Pure Chemical Industries, Ltd., glass-transition temperature: 91°C, weight-average molecular weight Mw: $165\times10^3$, molecular weight distribution Mw/Mn: 2.0) was used in place of the copolymer 2-1. The transparency of the obtained unstretched film 2-10 was high, the film thickness was 79 μm, and Tg of a resin composition 2-10 forming the unstretched film 2-10 was 115°C.
Next, the obtained unstretched film 2-10 was cut out into 7x7 cm, and uniaxial stretching at 2.0-fold magnification was performed using a biaxial stretching apparatus (Imoto Machinery Co., Ltd. IMC-190A) under a temperature condition of Tg of the resin composition 2-10 + 12°C (127°C) at a tension rate of 120 mm/min. to obtain a phase difference film 2-10 having a thickness of 56 μm.
With respect to the phase difference films obtained in Examples 2-1 to 2-7 and Comparative Examples 2-1 to 2-3, the retardation and the refractive index were measured by the following methods. The measurement results were as shown in Table 4.

(Measurement of Refractive Index and Retardation)

The retardation (Re, Rth) defined by the following equations was determined using a retardation measuring instrument (manufactured by Oji Scientific Instruments KOBRA-21ADH):

$$Re=|Nx-Ny|\times d$$

$$Rth=|Nz-(Nx+Ny)/2|\times d$$

wherein Nx: refractive index in main stretching direction, Ny: in-plane refractive index in direction perpendicular to main stretching direction, Nz: refractive index in direction perpendicular to plane (perpendicular to Nx and Ny), d: film thickness (μm).

[Table 4]

| | Film Thickness (μm) | Retardation (nm) | | Nx | Ny | Nz | Wavelength Dispersion Value D |
|---|---|---|---|---|---|---|---|
| | | Re | Rth | | | | |
| Example 2-1 | 59 | 349.5 | 174.7 | 1.594 | 1.600 | 1.600 | 1.05 |
| Example 2-2 | 52 | 88.7 | 44.3 | 1.595 | 1.596 | 1.596 | 1.00 |
| Example 2-3 | 56 | 136.4 | 68.2 | 1.594 | 1.596 | 1.596 | 1.01 |
| Example 2-4 | 60 | 108.4 | 54.2 | 1.593 | 1.595 | 1.595 | 0.98 |
| Example 2-5 | 59 | 26.7 | 13.3 | 1.593 | 1.594 | 1.594 | 0.73 |
| Example 2-6 | 55 | 14.0 | 14.0 | 1.594 | 1.595 | 1.595 | 1.05 |
| Example 2-7 | 33 | 11.8 | 11.8 | 1.593 | 1.593 | 1.596 | 1.05 |
| Comparative Example 2-1 | 30 | 270.0 | 135 | 1.595 | 1.604 | 1.604 | 1.06 |
| Comparative Example 2-2 | 58 | 66.7 | 33.3 | 1.591 | 1.590 | 1.590 | 1.17 |
| Comparative Example 2-3 | 56 | 100.6 | 50.3 | 1.585 | 1.587 | 1.587 | 0.98 |

As shown in Table 4, it was confirmed that the stretched films obtained in Examples successfully function as a phase difference film from the facts that negative birefringence having the smallest refractive index in the main stretching direction is exhibited and that the wavelength dispersion value D satisfies $0.70<D<1.06$.

The phase difference films obtained in Comparative Examples 2-1 and 2-2 had the wavelength dispersion value D of 1.06 or more. In addition, the film obtained in Comparative Example 2-3 had low Tg such as 115°C, and could not obtain heat resistance suitable for a phase difference film.

Industrial Applicability

According to the present invention, a negative phase difference film which excels in heat resistance and optical properties, and a liquid crystal display device provided with the same are provided.

Reference Signs List

10, 11 ··· phase difference film

## Claims

1. A phase difference film obtained by stretching a resin film formed of a resin composition containing a copolymer having a first structural unit represented by the following formula (1) and a second structural unit represented by the following formula (2), in at least a uniaxial direction, wherein
a content of the first structural unit in the copolymer is 3 to 50 mol% on the basis of a total of the first structural unit and the second structural unit:

[Chemical Formula 1]

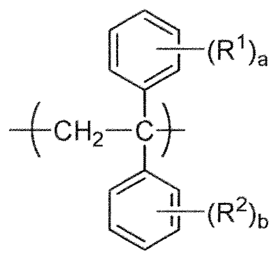

(1)

wherein a and b each represent independently an integer of 0 to 5; $R^1$ and $R^2$ each represent independently a hydrogen atom or an organic residue having 1 to 12 carbon atoms; and when a or b is an integer of 2 or more, a plurality of $R^1$ or $R^2$ each may be the same or different from each other; and

[Chemical Formula 2]

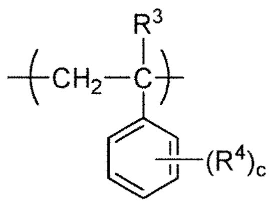

(2)

wherein c represents an integer of 0 to 5; $R^3$ represents a hydrogen atom or an organic residue having 1 to 4 carbon atoms; $R^4$ represents a hydrogen atom or an organic residue having 1 to 12 carbon atoms; and when c is an integer of 2 or more, a plurality of $R^4$ may be the same or different from each other.

**2.** A phase difference film obtained by stretching a resin film formed of a resin composition containing a copolymer having a first structural unit represented by the following formula (1) and a second structural unit represented by the following formula (2), and poly(2,6-dimethyl-1,4-phenylene oxide), in at least a uniaxial direction,
wherein
a content of the poly(2,6-dimethyl-1,4-phenylene oxide) in the resin composition is 5 to 30 mass% on the basis of a total amount of the resin composition:

[Chemical Formula 3]

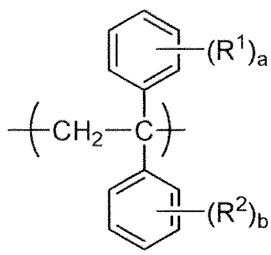

(1)

wherein a and b each represent independently an integer of 0 to 5; $R^1$ and $R^2$ each represent independently a hydrogen atom or an organic residue having 1 to 12 carbon atoms; and when a or b is an integer of 2 or more, a plurality of $R^1$ or $R^2$ each may be the same or different from each other; and

[Chemical Formula 4]

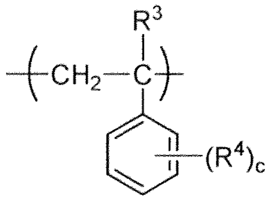

(2)

wherein c represents an integer of 0 to 5; $R^3$ represents a hydrogen atom or an organic residue having 1 to 4 carbon atoms; $R^4$ represents a hydrogen atom or an organic residue having 1 to 12 carbon atoms; and when c is an integer of 2 or more, a plurality of $R^4$ may be the same or different from each other.

**3.** The phase difference film according to claim 2, wherein a content of the first structural unit in the copolymer is 3 to 50 mol% on the basis of a total of the first structural unit and the second structural unit.

**4.** The phase difference film according to any one of claims 1 to 3, wherein a glass-transition temperature of the copolymer is 105 to 170°C.

**5.** The phase difference film according to any one of claims 1 to 4, wherein an absolute value of a photoelastic coefficient is $5.0 \times 10^{-12}$ (/Pa) or less.

**6.** The phase difference film according to any one of claims 1 to 4, wherein a wavelength dispersion value D satisfies the relationship of $0.70<D<1.06$.

**7.** The phase difference film according to any one of claims 1 to 6, wherein a glass-transition temperature of the resin composition is 120°C or more.

**8.** The phase difference film according to any one of claims 1 to 7, wherein a refractive index Nx in an x-axial direction, a refractive index Ny in a y-axial direction and a refractive index Nz in a z-axial direction satisfy a relationship of $Nz \geq Ny > Nx$, when a main stretching direction of the phase difference film is referred to as an x-axial direction, a direction perpendicular to the x-axial direction in a plane of the phase difference film is referred to as a y-axial direction, and a direction perpendicular to both of the x-axial direction and the y-axial direction is referred to as a z-axial direction.

**9.** A liquid crystal display device provided with the phase difference film according to any one of claims 1 to 8.

*Fig.1*

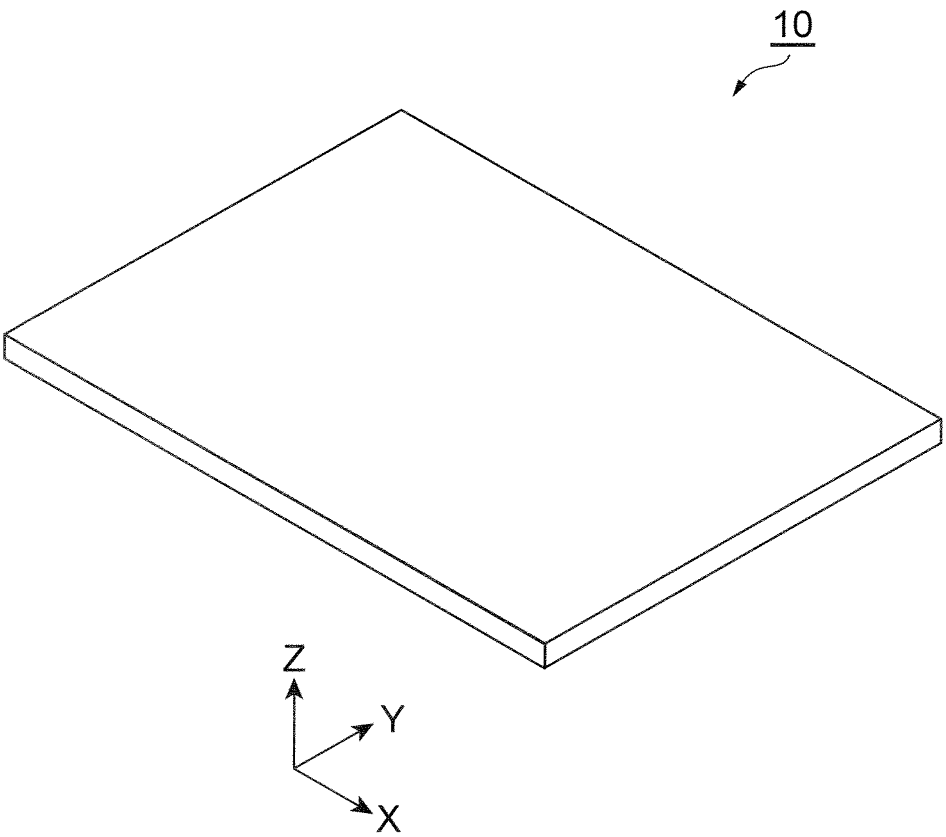

Fig.2

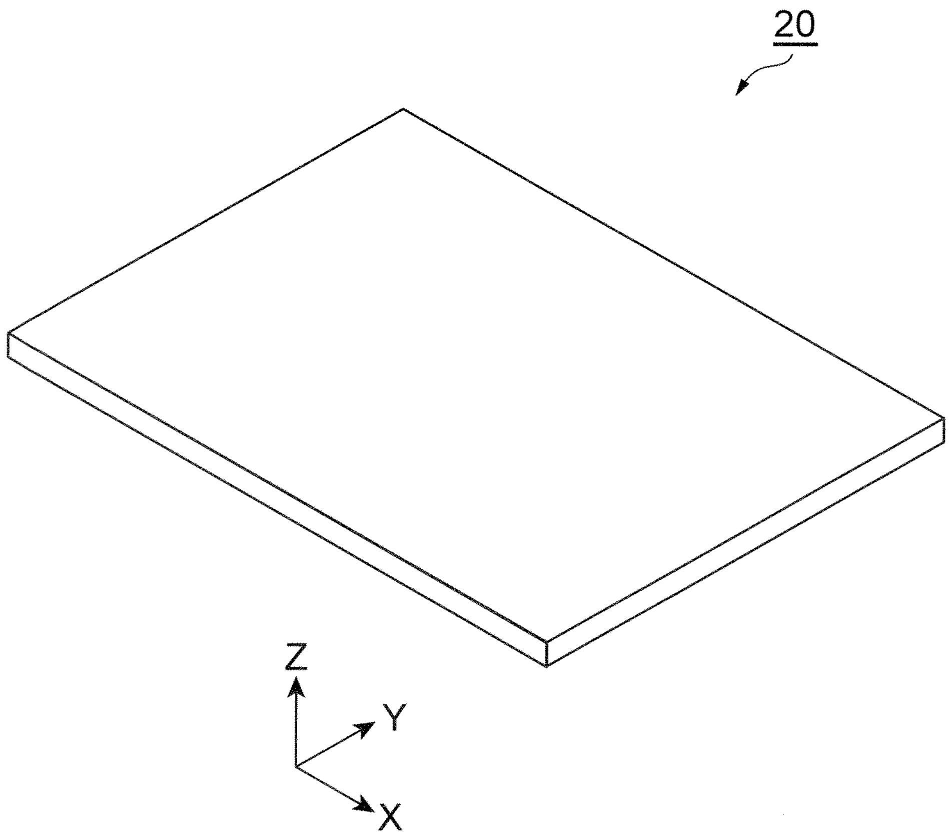

Fig.3

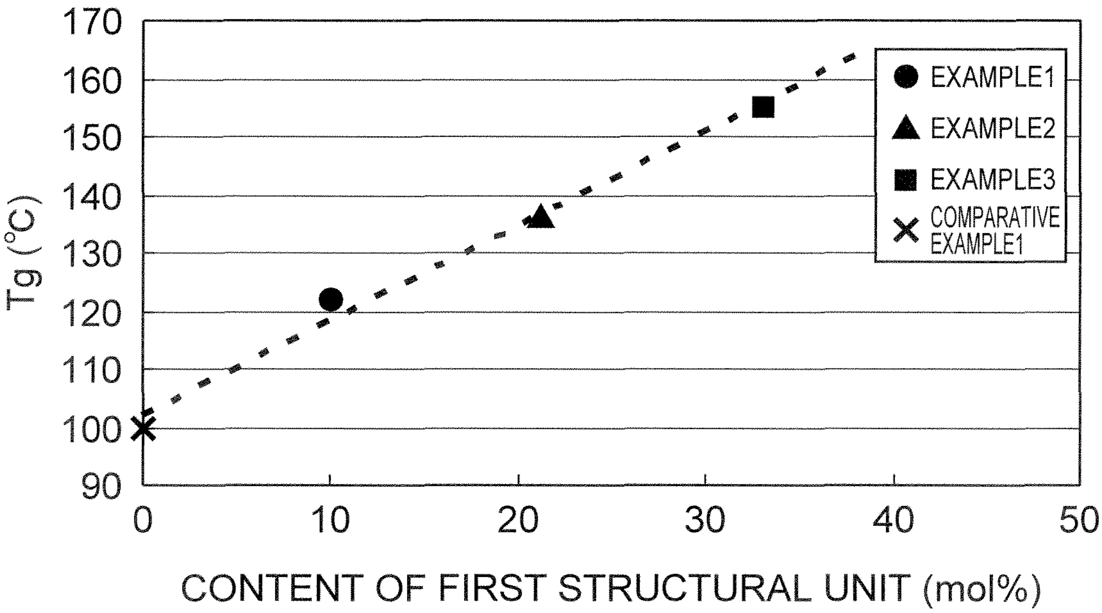
170
160
150
140
130
120
110
100
90
Tg (°C)
0
10
20
30
40
50
CONTENT OF FIRST STRUCTURAL UNIT (mol%)
EXAMPLE1
EXAMPLE2
EXAMPLE3
COMPARATIVE EXAMPLE1

*Fig.4*

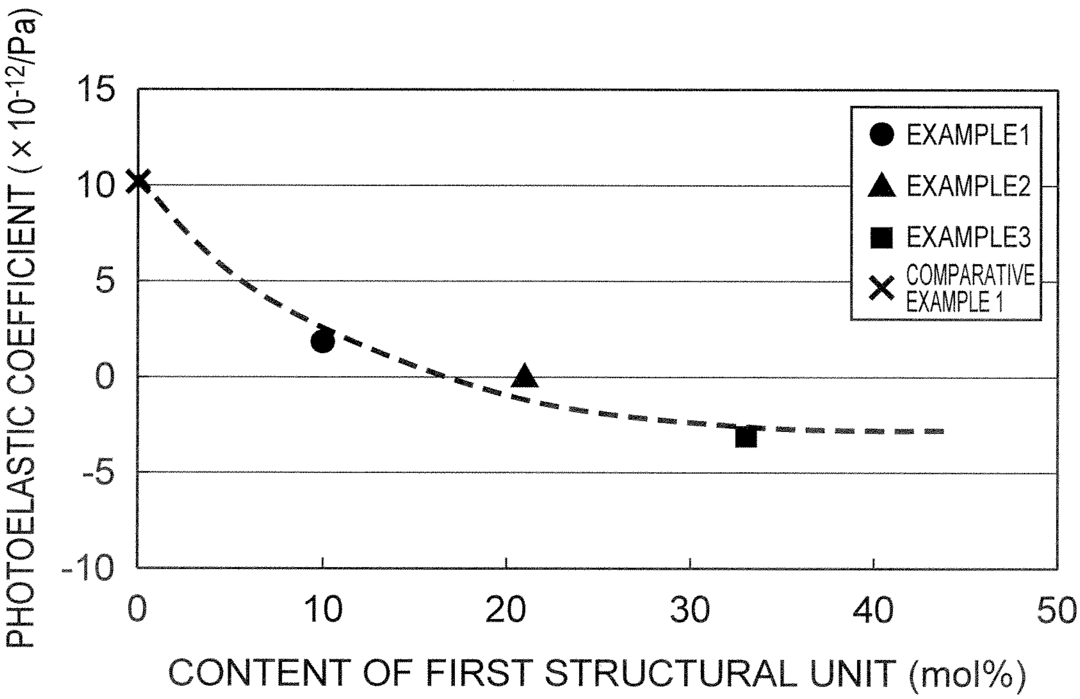
PHOTOELASTIC COEFFICIENT (×10$^{-12}$/Pa)
15
10
5
0
-5
-10
0
10
20
30
40
50
CONTENT OF FIRST STRUCTURAL UNIT (mol%)
EXAMPLE1
EXAMPLE2
EXAMPLE3
COMPARATIVE EXAMPLE 1

**INTERNATIONAL SEARCH REPORT**

International application No.
PCT/JP2012/078740

A. CLASSIFICATION OF SUBJECT MATTER
*G02B5/30*(2006.01)i, *C08F212/06*(2006.01)i, *C08J5/18*(2006.01)i, *G02F1/13363* (2006.01)i

According to International Patent Classification (IPC) or to both national classification and IPC

B. FIELDS SEARCHED

Minimum documentation searched (classification system followed by classification symbols)
G02B5/30, C08F212/06, C08J5/18, G02F1/13363

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)
CA(STN), REGISTRY(STN)

C. DOCUMENTS CONSIDERED TO BE RELEVANT

| Category* | Citation of document, with indication, where appropriate, of the relevant passages | Relevant to claim No. |
|---|---|---|
| A | JP 2008-144006 A (Denki Kagaku Kogyo Kabushiki Kaisha), 26 June 2008 (26.06.2008), paragraphs [0014], [0015], [0040] to [0045], [0059] (Family: none) | 1-9 |
| A | WO 99/41312 A1 (BASF AG), 19 August 1999 (19.08.1999), page 1, lines 9 to 14; page 7, lines 20 to 24; page 9, lines 12 to 16; page 9, line 42 to page 10, line 17; page 11, lines 4 to 17 & DE 19805587 A & AU 3027099 A | 1-9 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 24 January, 2013 (24.01.13) | 05 February, 2013 (05.02.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No. PCT/JP2012/078740

C (Continuation). DOCUMENTS CONSIDERED TO BE RELEVANT

| Category* | Citation of document, with indication, where appropriate, of the relevant passages | Relevant to claim No. |
|---|---|---|
| A | JP 10-501831 A (BASF AG.), 17 February 1998 (17.02.1998), claims; page 9, lines 10 to 17; page 11, lines 11 to 15<br>& US 5854353 A & EP 778853 A<br>& WO 1995/034586 A2 & DE 4420917 A<br>& CA 2193131 A & CN 1152927 A<br>& MX 9606474 A | 1-9 |
| E,A | JP 2012-226996 A (Nippon Zeon Co., Ltd.), 15 November 2012 (15.11.2012), claims; paragraphs [0015] to [0017], [0023], [0079], [0082], [0088], [0091]<br>(Family: none) | 1-9 |
| A | JP 2011-118137 A (Nippon Zeon Co., Ltd.), 16 June 2011 (16.06.2011), claims; paragraphs [0016], [0024], [0056]<br>(Family: none) | 1-9 |
| A | JP 2010-78905 A (Nippon Zeon Co., Ltd.), 08 April 2010 (08.04.2010), claims; paragraphs [0015], [0044], [0045]<br>(Family: none) | 1-9 |
| A | JP 3-91517 A (Nippon Soda Co., Ltd.), 17 April 1991 (17.04.1991), claims; page 2, upper left column, lines 8 to 12; page 7, lower left column, line 15 to lower right column, line 13<br>(Family: none) | 1-9 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2003255102 A
- US 5612801 A
- JP 2010078905 A